Europäisches Patentamt

**European Patent Office**

**Office européen des brevets**

(11) Veröffentlichungsnummer: **0 097 734**
**A1**

(12) **EUROPÄISCHE PATENTANMELDUNG**

(21) Anmeldenummer: **82105817.9**

(22) Anmeldetag: **30.06.82**

(51) Int. Cl.³: **G 01 G 19/02**
**E 02 D 27/32**

(43) Veröffentlichungstag der Anmeldung:
**11.01.84 Patentblatt 84/2**

(84) Benannte Vertragsstaaten:
**AT BE CH DE FR GB IT LI LU NL SE**

(71) Anmelder: **CARL SCHENCK AG**
**Landwehrstrasse 55 Postfach 40 18**
**D-6100 Darmstadt(DE)**

(72) Erfinder: **Gassmann, Helmut, Dr.**
**Donnersbergstrasse 3**
**D-6101 Seeheim(DE)**

(72) Erfinder: **Giesecke, Peter, Dr. Dipl.-Phys.**
**Talstrasse 2a**
**D-6101 Seeheim/Stettbach(DE)**

(72) Erfinder: **Feith, Johann**
**Spitzwegstrasse 11**
**D-6074 Roedermark(DE)**

(74) Vertreter: **Brand, Fritz, Dipl.-Ing.**
**Carl Schenck AG Patentabteilung Landwehrstrasse 55**
**Postfach 4018**
**D-6100 Darmstadt(DE)**

(54) **Verfahren zur Herstellung einer Strassenfahrzeugwaage und Schalung zur Durchführung des Verfahrens.**

(57) Mehrere Schalungssegmente (4) sind in einer Waageng-rube (14) einer Straßenfahrzeugwaage zu einer verlorenen, tragenden Schalung (1) zusammengesetzt, in die eine aus Beton bestehende Waagenbrücke (8) eingegossen ist. Rah-menabschnitte (5) sind mit den einzelnen Schalungssegmen-ten (4) verbunden und bilden im fertiggestellten Zustand der Straßenfahrzeugwaage einen den Rand der Waagengrube (14) umgebenden Fundamentrahmen. Gleichzeitig mit dem Betonieren der Waagenbrücke (8) werden auch ein außer-halb der Rahmenabschnitte (5) liegender Fundament-Randstreifen (11a) und Wägezellen Fundamente (1o) für die die Waagenbrücke (8) tragenden Wägezellen (9) betoniert und es werden die Stoßfänger (12) einbetoniert.

Fig. 3

0097734

Verfahren zur Herstellung einer Straßenfahrzeugwaage und
Schalung zur Durchführung des Verfahrens

Die Erfindung betrifft ein Verfahren zur Herstellung einer
Straßenfahrzeugwaage mit einer Waagenbrücke aus Beton, die
in einer Waagengrube angeordnet und auf Wägezellen abgestützt ist, mit einem den Rand der Waagengrube bildenden
Fundamentrahmen und mit Stoßfängern, wobei die Waagenbrücke
in eine Schalung betoniert wird.

Mit elektromechanischen Wägezellen als Meßwertaufnehmern bestückte Straßenfahrzeugwaagen werden bevorzugt mit aus Beton
bestehenden Waagenbrücken ausgerüstet. Das verhältnismäßig
große Totgewicht derartiger Waagenbrücken beeinträchtigt
die Wägegenauigkeit wegen des hohen Auflösungsgrades der
Wägezellen nicht; die große Masse der Waagenbrücke stellt
aber wegen ihrer Trägheit einen sehr wirksamen Schutz der
Wägezellen vor stoßartigen Überlastungen dar.

Aus Beton bestehende Waagenbrücken, die aus Festigkeitsgründen mit einer Stahlbewehrung versehen sind, werden herkömmlicherweise von Betonunternehmen gefertigt, mit Schwerlasttransportern zur Baustelle gefahren und dort in die vorbereiteten Waagengruben gelegt. Eine wirtschaftliche Ausführung derartiger Straßenfahrzeugwaagen ist wegen des sehr
hohen Transportaufwandes nur in der Nähe von für die Herstellung der Waagenbrücke qualifizierten Betonunternehmen
möglich. Anderenfalls muß die Herstellung der Waagenbrücke
an der Baustelle vorgesehen werden. Dies macht aber die mit
hohen Kosten verbundene Errichtung einer Schalung an der
Baustelle erforderlich.

Diese Anforderungen erschweren den Bau derartiger Straßenfahrzeugwaagen in vielen Bereichen; insbesondere in Entwicklungsländern ist oftmals keine Möglichkeit gegeben,
eine Waagenbrücke aus Beton herzustellen, weil die Materialien und die Fachkräfte für die Herstellung der benötigten Schalung fehlen.

Da es sich auch bei der aus Beton bestehenden Waagenbrücke um ein Waagenbauteil handelt, an dessen Abmessungen höhere Anforderungen gestellt werden als an herkömmliche Betonteile, die Teile von Gebäuden bilden, bereitet die Einhaltung der vorgeschriebenen Herstellungsgenauigkeit oftmals Schwierigkeiten, und zwar insbesondere im Zusammenwirken mit benachbarten oder verbundenen Teilen. Hierbei handelt es sich um den den oberen Rand der Waagengrube bildenden Fundamentrahmen, in den die Waagenbrücke mit möglichst geringem Spiel hineinpassen muß, und um die Stoßfänger, deren Teile mit dem Fundament bzw. mit der Waagenbrücke verbunden sind und sich im normalen Betriebszustand der Waage nicht berühren. Nur wenn stoßartige horizontale Kräfte auftreten, beispielsweise wenn ein Straßenfahrzeug auf der Waagenbrücke stark abgebremst wird, sollen die Teile der Stoßfänger miteinander in Eingriff treten und die seitliche Bewegung der Waagenbrücke begrenzen. Die Anbringung dieser Teile bereitet Schwierigkeiten, wenn bei der Herstellung der aus Beton bestehenden Waagenbrücke und des Fundaments größere Maßabweichungen auftreten.

Aufgabe der Erfindung ist es daher, ein Verfahren der eingangs genannten Gattung zu schaffen, das es ermöglicht, auch in Gebieten mit schwierigen Transportbedingungen eine Straßenfahrzeugwaage mit einer aus Beton bestehenden Waagenbrücke mit möglichst geringem Arbeitsaufwand herzustellen.

Diese Aufgabe wird erfindungsgemäß dadurch gelöst, daß die Waagenbrücke in eine verlorene Schalung betoniert wird und daß gleichzeitig mit dem Betonieren der Waagenbrücke auch der Fundamentrahmen und die Stoßfänger einbetoniert werden.

Durch die Verwendung einer verlorenen Schalung läßt sich mit geringem Arbeitsaufwand an der Baustelle eine Waagenbrücke in verhältnismäßig hoher Maßgenauigkeit herstellen. Der für die Anpassung der umgebenden Teile, insbesondere des Fundamentrahmens und der Stoßfänger erforderliche Arbeitsaufwand wird dadurch in besonderem Maße herabgesetzt, daß diese Teile gleichzeitig mit dem Betonieren der Waagenbrücke in vorgegebener Ausrichtung zu dieser betoniert werden, so daß eine nachträgliche Anpassung und Ausrichtung nicht erforderlich ist.

Als besonders vorteilhaft hat es sich erwiesen, gleichzeitig mit dem Betonieren der Waagenbrücke auch die Wägezellenfundamente zu betonieren, damit auch für die Wägezellen der Aufwand einer nachträglichen Anpassung des Fundaments entfällt.

Eine für die Durchführung des erfindungsgemäßen Verfahrens besonders geeignete Schalung ist dadurch gekennzeichnet, daß die verlorene Schalung aus einzelnen, vorgefertigten und an ihren Rändern miteinander verbundenen Schalungssegmenten besteht. Diese Schalungssegmente können für beliebige Brückengrößen in für den Transport günstigen Abmessungen vorgefertigt und mit verhältnismäßig geringem Aufwand auch über längere Strecken an die Baustelle transportiert werden.

Vorteilhafterweise wird die verlorene Schalung als tragende Schalung ausgeführt, d.h. sie übernimmt teilweise oder ganz die Funktion einer Bewehrung, so daß auf sonstige Bewehrungselemente ganz oder teilweise verzichtet werden kann.

Die verlorene Schalung kann durch längsverlaufende und/ oder querverlaufende Trennfugen unterteilt sein. Bei der Auslegung als tragende Schalung werden die Ränder der Schalungssegmente mindestens an den querverlaufenden Trennfugen zugfest miteinander verbunden, vorzugsweise verschraubt, vernietet oder verschweißt, um die in die Beweh-

- 4 -                                    0097734

rung eingeleiteten Zugkräfte übernehmen zu können.

Weitere vorteilhafte Ausgestaltungen des Erfindungsgedankens
sind Gegenstand von Unteransprüchen.

Die Erfindung wird nachfolgend an Ausführungsbeispielen
näher erläutert, die in der Zeichnung dargestellt sind. Es
zeigt:

Fig. 1  in räumlicher Darstellungsweise eine aus Stahlblechsegmenten bestehende verlorene, nicht tragende Schalung für eine aus Beton bestehende Waagenbrücke,

Fig. 2  in einer Darstellung entsprechend der Fig. 1 eine
        aus einzelnen Stahlblechsegmenten bestehende, verlorene, tragende Schalung für eine aus Beton bestehende Waagenbrücke,

Fig. 3  einen Längsschnitt durch eine Straßenfahrzeugwaage
        mit einer Waagenbrücke, die in eine verlorene Schalung betoniert wurde,

Fig. 4  eine Teil-Draufsicht auf die Straßenfahrzeugwaage
        nach Fig. 3,

Fig. 5  einen Schnitt längs der Linie V-V in Fig. 4 und

Fig. 6  einen vergrößerten Teilschnitt im Randbereich der
        Waagenbrücke mit dem angrenzenden Fundamentrahmen.

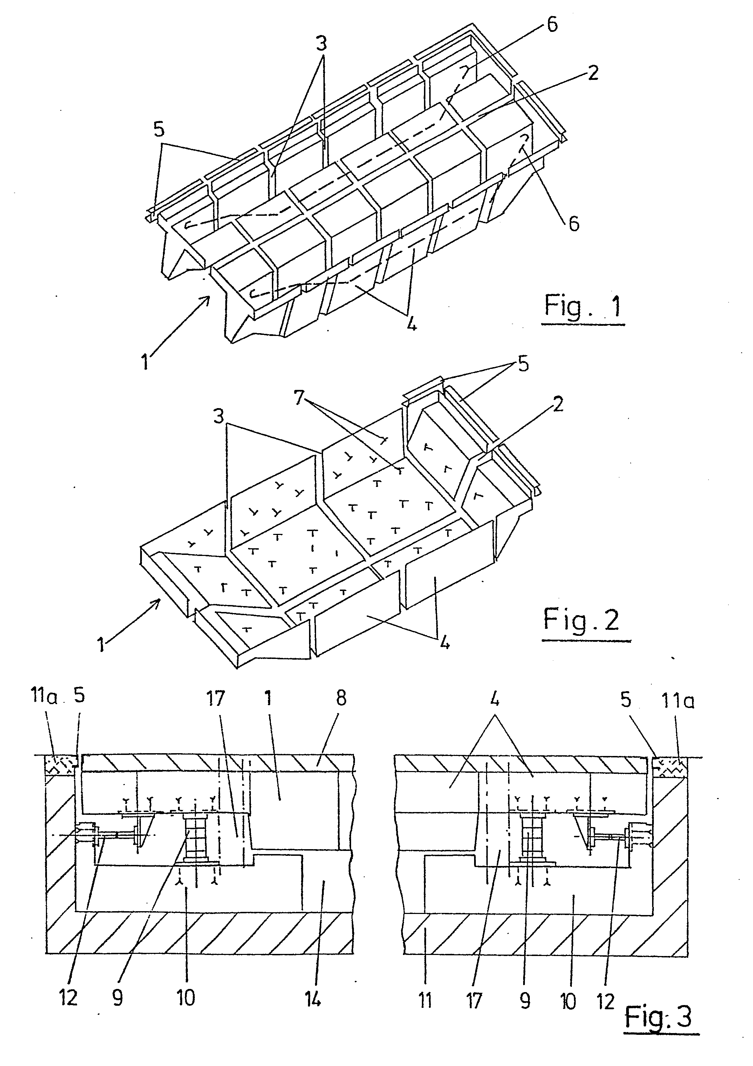

Die in Fig. 1 gezeigte verlorene, nicht tragende Schalung 1
für eine aus Beton bestehende Waagenbrücke ist durch eine
längsverlaufende Trennfuge 2 und querverlaufende Trennfugen
3 in einzelne vorgefertigte Schalungssegmente 4 unterteilt,
die beispielsweise aus Stahlblech bestehen.

Ein Fundamentrahmen, der nach der Fertigstellung der Straßenfahrzeugwaage den Rand der Waagengrube bilden soll, ist ebenfalls in Rahmenabschnitte 5 unterteilt, die aus U-Profilschienen bestehen und in ihren Längenabmessungen jeweils den einzelnen Schalungssegmenten 4 entsprechen.

In die Schalung 1 sind in Fig. 1 nur angedeutete Bewehrungsstäbe 6 eingelegt, die in der fertiggestellten Waagenbrücke die tragende Bewehrung bilden.

Eine andere Ausführungsform der Schalung 1 für eine aus Beton bestehende Waagenbrücke ist in Fig. 2 dargestellt. Die Schalung 1 ist hierbei ebenfalls durch eine längsverlaufende Trennfuge 2 und querverlaufende Trennfugen 3 in Schalungssegmente 4 aus Stahlblech unterteilt. Hierbei bilden die an ihren Rändern im fertiggestellten Zustand der Schalung miteinander verbundenen Schalungssegmente 4, die beispielsweise verschraubt, vernietet oder verschweißt sind, eine zugfeste Bewehrung, d.h. es handelt sich um eine tragende Schalung. Zur Verbesserung der Kraftübertragung zwischen der Schalung 1 und dem einzugießenden Beton sind die Schalungssegmente 4 an ihrer Innenseite mit Ankerteilen 7 besetzt. Auch bei diesem Ausführungsbeispiel ist der Fundamentrahmen in Rahmenabschnitte 5 unteteilt.

Die Fig. 3 - 6 zeigen die unter Verwendung einer verlorenen, tragenden Schalung 1 hergestellte Straßenfahrzeugwaage. Eine aus Beton bestehende Waagenbrücke 8 ist über Wägezellen 9, die jeweils auf einem Wägezellenfundament 1o ruhen, am Fundament 11 der Waage abgestützt. Mit der Waagenbrücke 8 und mit dem Fundament verbundene Stoßfänger 12 bestehen aus zwei durch einen Winkelschlitz 13 im normalen Betriebszustand der Waage voneinander getrennten Stoßfängerteilen, die aneinander zur Anlage kommen, sobald hohe seitliche Kräfte auf die Waagenbrücke 8 ausgeübt werden.

Ein aus den Rahmenabschnitten 5 zusammengesetzter Fundamentrahmen umgibt die Waagenbrücke 8 in geringem Abstand und bildet den oberen Rand der Waagengrube 14.

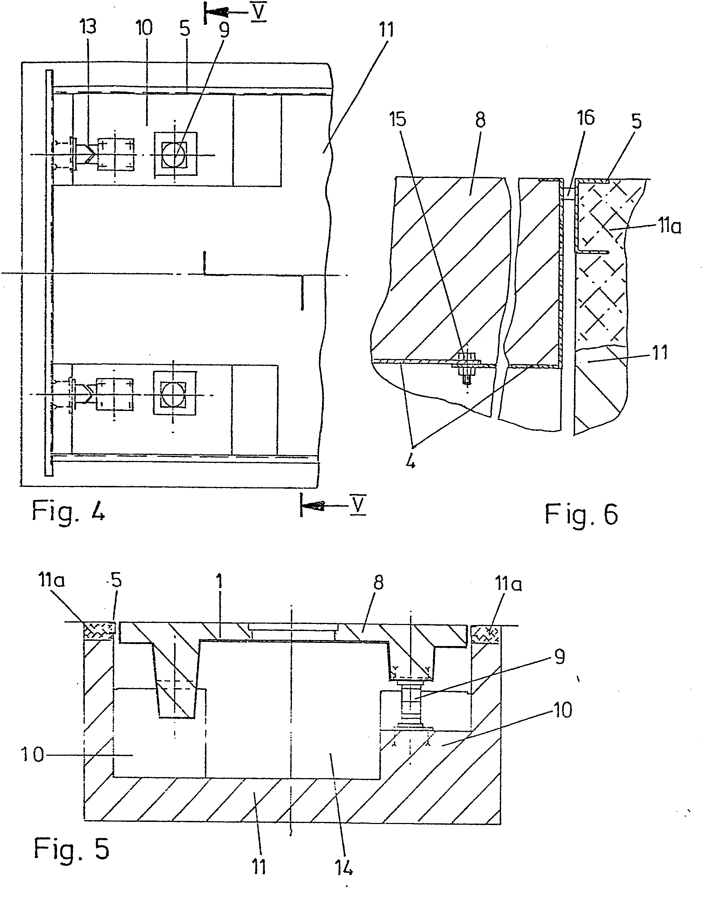

Wie man aus Fig. 6 erkennt, sind die Ränder der einzelnen Schalungssegmente 4 überlappt und durch Schrauben 15 miteinander zugfest verbunden.

Bei der Herstellung der Straßenfahrzeugwaagen wird zunächst das Fundament 11 mit Ausnahme seines oberen Randes betoniert. In die so gebildete Waagengrube 14 wird die aus den Schalungssegmenten 4 bestehende Schalung 1 eingebracht und auf gesonderten, herausnehmbaren Schalungsstützen (nicht dargestellt) abgestützt. Die Wägezellen 9 und die Stoßfänger 12 werden in ihrer genauen Ausrichtung angeordnet.

Die Rahmenabschnitte 5 sind über kurze Schweißbolzen 16 mit den zugeordneten Schalungssegmenten 4 verbunden. Für die Wägezellenfundamente 1o wird in der Waagengrube 14 jeweils eine gesonderte Schalung vorgesehen, die über ein in Fig. 3 nur angedeutetes Rohr 17 mit der Schalung 1 verbunden ist.

Dann wird in einem einzigen Betonier-Arbeitsgang die Waagenbrücke 8, der außerhalb der Rahmenabschnitte 5 liegende obere Fundamentrand 11a und die Wägezellenfundamente 1o betoniert, wobei gleichzeitig die Anschlüsse für die Wägezellen 9 und für die Stoßfänger 12 einbetoniert werden.

Alle einzubetonierenden Teile werden daher vor dem Betonieren in der vorgegebenen Weise zueinander ausgerichtet und durch den Beton nach dem Abbinden in dieser Ausrichtung gehalten, ohne daß nachträgliche Ausrichtarbeiten erforderlich sind. Nachdem der Beton abgebunden hat, werden die als Abstandshalter wirkenden Schweißbolzen 16 beispielsweise mittels einer Trennscheibe entfernt, die in die Fuge zwischen der Schalung 1 und den Rahmenabschnitten 5 eingeführt wird. Nach dem Entfernen der Schalungsstützen und der Rohre 17 mit dem darin enthaltenen Beton ruht die Waagenbrücke 8 nur noch auf den Wägezellen 9. Die Schalung 1 bildet eine  wannenförmige Außenbewehrung der Waagenbrücke 8.

Patentansprüche:

1. Verfahren zur Herstellung einer Straßenfahrzeugwaage mit einer Waagenbrücke aus Beton, die in einer Waagengrube angeordnet und auf Wägezellen abgestützt ist, mit einem den Rand der Waagengrube bildenden Fundamentrahmen und mit Stoßfängern, wobei die Waagenbrücke in eine Schalung betoniert wird, dadurch gekennzeichnet, daß die Waagenbrücke (8) in eine verlorene Schalung (1) betoniert wird und daß gleichzeitig mit dem Betonieren der Waagenbrücke (8) auch der Fundamentrahmen (5) und die Stoßfänger (12) einbetoniert werden.

2. Verfahren nach Anspruch 1, dadurch gekennzeichnet, daß gleichzeitig mit dem Betonieren der Waagenbrücke (8) auch die Wägezellenfundamente (1o) betoniert werden.

3. Schalung zur Durchfürhung des Verfahrens nach Anspruch 1 oder 2, dadurch gekennzeichnet, daß die verlorene Schalung (1) aus einzelnen, vorgefertigten und an ihren Rändern miteinander verbundenen Schalungssegmenten (4) besteht.

4. Schalung nach Anspruch 3, dadurch gekennzeichnet, daß sie als tragende Schalung ausgeführt ist.

5. Schalung nach Anspruch 4, dadurch gekennzeichnet, daß sie durch eine längsverlaufende Trennfuge (2) in Schalungssegmente unterteilt ist.

6. Schalung nach Anspruch 3 oder 4, dadurch gekennzeichnet, daß sie durch querverlaufende Trennfugen (3) unterteilt ist und daß die Ränder der Schalungssegmente (4) mindestens an den querverlaufenden Trennfugen (3) zugfest miteinander verbunden, vorzugsweise verschraubt, vernietet oder verschweißt sind.

7. Schalung nach Anspruch 3, dadurch gekennzeichnet, daß die Schalungssegmente (4) aus Stahlblech bestehen.

8. Schalung nach Anspruch 3, dadurch gekennzeichnet, daß sie als nichttragende Schalung (1) ausgeführt ist und eine Betonbewehrung (6) aufnimmt.

0097734

Fig. 1

Fig. 2

Fig. 3

Fig. 4

Fig. 6

Fig. 5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B-1 163 566  (TOLEDO SCALE CORP.) <br> * Spalte 4, Absatz 2; Spalte 5, Zeile 45 - Spalte 6, Zeile 17 * | | G 01 G  19/02 <br> E 02 D  27/32 |
| A | FR-A-2 152 970  (TRANSCALE AB) <br><br> * Seite 1, Zeilen 13-24; Ansprüche 1-5; Figur 3 * | | |
| A | GB-A-2 076 978  (W. & T. AVERY LTD.) <br> * Ansprüche 1-15; Figur 1 * | | |
| A | FR-A-2 081 759  (CARL SCHENCK MASCHINENFABRIK GmbH) | | |
| A | US-A-1 513 494  (CH. DAILY) | | **RECHERCHIERTE SACHGEBIETE (Int. Cl. ³)** <br><br> G 01 G <br> E 02 D |
| A | US-A-3 727 707  (J. MACHALA) | | |

Der vorliegende Recherchenbericht wurde für alle Patentansprüche erstellt.

| Recherchenort <br> DEN HAAG | Abschlußdatum der Recherche <br> 07-03-1983 | Prüfer <br> VITZTHUM N.A. |
|---|---|---|